# EUROPEAN PATENT APPLICATION

(11) **EP 4 835 393 A1**
(43) Date of publication of application: **04.11.2026**
(21) Application number: 26176059.9
(22) Date of filing: 01.05.2026
(51) Int. Cl.: G01B 5/30, B33Y 80/00, G01N 3/08

(54) **ADDITIVE MANUFACTURED EXTENSOMETER STRUCTURE**

(30) Priority: 02.05.2025 US 202563798796 P
(71) Applicant: Illinois Tool Works Inc., Glenview IL 60025 (US)
(72) Inventor: BERUWALAGE, Enushka, Glenview, 60025 (US); ROGOTZKE, Riley August, Glenview, 60025 (US)
(74) Representative: HGF

(57) **Abstract**

An extensometer structure includes a first integrally formed additive manufactured part having a proximal end, a distal end and an extension arm that extends from the proximal end to the distal end. A second integrally formed additive manufactured part has a proximal end, a distal end and an extension arm that extends from the proximal end to the distal end of the second additive manufactured part. A first specimen engaging member is located at the distal end of the first additive manufactured part. A second specimen engaging member is located at the distal end of the second additive manufactured part. A displacement assembly is coupled to the proximal ends of the first additive manufactured part and the second additive manufactured part. The displacement assembly allows the first additive manufactured part to move relative to the second additive manufactured part.

## Description

### CROSS-REFERENCE TO RELATED APPLICATIONS

This application claims the benefit of priority from U.S. Provisional Patent Application No. 63/798,796 filed May 2, 2025 for "ADDITIVE MANUFACTURED EXTENSOMETER STRUCTURE," the content of which is hereby incorporated by reference.

### BACKGROUND

The discussion below is merely provided for general background information and is not intended to be used as an aid in determining the scope of the claimed subject matter.

Extensometers are commonly used for measuring strain in a test specimen. Numerous forms of extensometers have been advanced in the art. One type of extensometer is contact extensometers that contact a test specimen that is being subject to loads to determine specimen properties. The strain is sensed by specimen engaging members that engage the specimen at contact points and extend to a displacement assembly and one or more sensor devices. The displacement assembly allows the specimen engaging members to move toward or away from each other and the one or more sensor devices measure strain in the test specimen.

### SUMMARY

An extensometer structure includes a first integrally formed additive manufactured part having a proximal end, a distal end and an extension arm that extends from the proximal end to the distal end. A second integrally formed additive manufactured part has a proximal end, a distal end and an extension arm that extends from the proximal end to the distal end of the second additive manufactured part. A first specimen engaging member is located at the distal end of the first additive manufactured part. A second specimen engaging member is located at the distal end of the second additive manufactured part. A displacement assembly is coupled to the proximal ends of the first additive manufactured part and the second additive manufactured part. The displacement assembly allows the first additive manufactured part to move relative to the second additive manufactured part.

A method of manufacturing an extensometer includes forming a first integral additive manufactured part having a proximal end, a distal end and an extension arm that extends from the proximal end to the distal end and forming a second integral additive manufactured part having a proximal end, a distal end and an extension arm that extends from the proximal end to the distal end of the second integral additive manufactured part. A first specimen engaging member is provided at the distal end of the first integral additive manufactured part and a second specimen engaging member is provided at the distal end of the second integral additive manufactured part. A displacement assembly is coupled to the proximal ends of the first integral additive manufactured part and the second integral additive manufactured part to allow the first integral additive manufactured part to move relative to the second integral additive manufactured part.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

FIG. 1 is a front perspective view of an extensometer according to an embodiment.
FIG. 2 is a back perspective view of the extensometer illustrated in FIG. 1.
FIG. 3 is an exploded perspective view of the extensometer illustrated in FIGS. 1 and 2.
FIG. 4 is a front view of FIGS. 1 and 2.
FIG. 5 is a section view taken through the section line indicated in FIG. 4.
FIG. 6 illustrates the section view in FIG. 5 in a full compression state.
FIG. 7 illustrates the section view of FIG. 5 in full tension state.
FIG. 8 illustrates a section view taken through the section line indicated in FIG. 5.
FIG. 9 illustrates a section view taken through the section line indicated in FIG. 5.

### DETAILED DESCRIPTION

Contact extensometers measure the deformation of a test specimen by directly placing specimen engaging members or contact probes onto the test specimen, such as but not limited **to** contacting ends of or knife-edge blades or elongated ceramic rods. The specimen engaging members are coupled to a displacement assembly to allow at least one of the specimen engaging members to move in response to compression or tensile elongation of the test specimen.

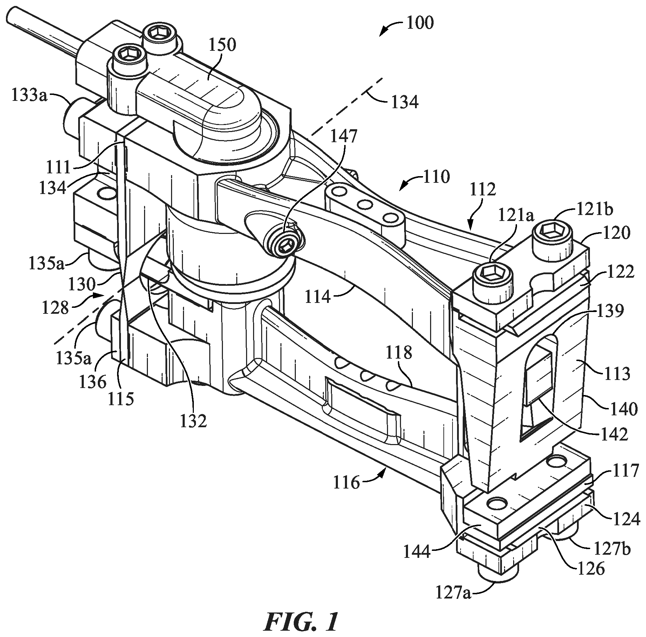

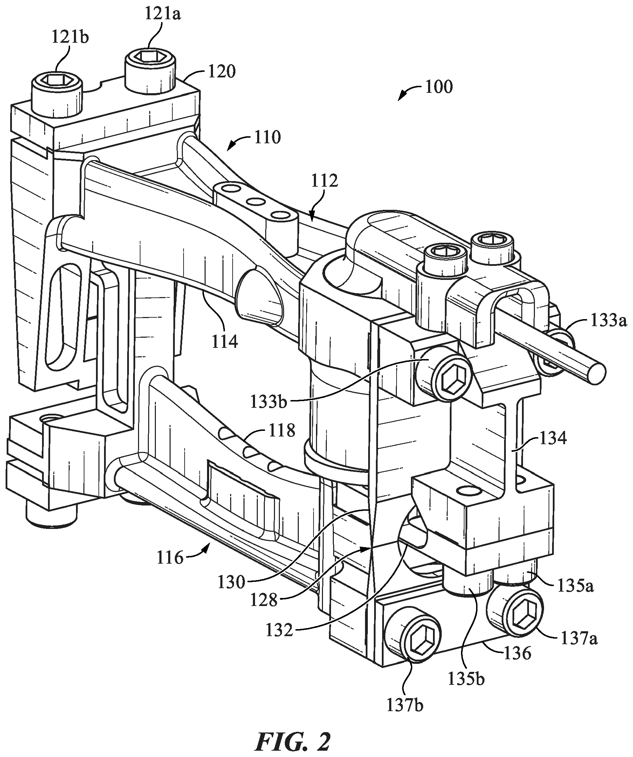

FIG. 1 is a front perspective view of a contact extensometer 100 according to an embodiment. FIG. 2 is a back perspective view of contact extensometer 100. Extensometer 100 is one embodiment of an exemplary extensometer configured to measure axial strain in tension, compression and through zero fatigue testing applications in, for example but not limited to, a 1000-degree Fahrenheit environment. Extensometer 100 includes an extensometer structure 110. As used here in "extensometer structure" means at least some of the interconnected mechanical components and does not include any sensing device for measuring movement of the components of the extensometer structure. Rather, various types of sensing devices can be used with the extensometer structure disclosed herein to form an operable extensometer that provides an output signal indicative of displacement such as elongation of a test specimen. Most if not all of the components of extensometer structure 110 are manufactured using additive manufacturing. Additive manufacturing, also known as three-dimensional printing, is a process where parts are built layer-by-layer from a digital file of 3D model data. A wide range of materials may be used to build additive manufactured parts including plastic and metals. In the case of metal additive manufacturing, which may used to create extensometer structure 110, a heat source, like a laser or electronic beam, may be used to fuse metal powder or wire.

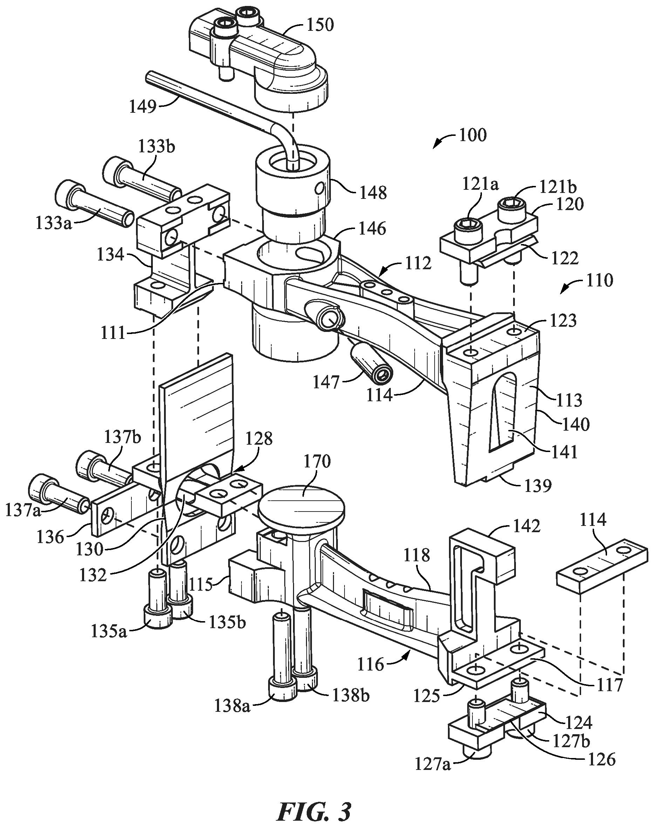

FIG. 3 is an exploded perspective view of extensometer 100 illustrated in FIGS. 1 and 2. Extensometer structure 110 includes a first integrally formed additive manufactured part 112 having a proximal end 111, a distal end 113 and an extension arm 114 that extends from proximal end 111 to distal end 113. Extensometer structure 110 further includes a second integrally formed additive manufactured part 116 having a proximal end 115, a distal end 117 and an extension arm 118 that extends from proximal end 115 to distal end 117. The term "integrally formed" used herein is defined as being a single continuous and uniform body.

As illustrated in FIGS. 1-3, a first mount 120 is configured to couple a first specimen engaging member 122 to distal end 113 of first additive manufactured part 112. More specifically, first mount 120 may use a pair of fasteners 121a and 121b to mount first specimen engaging member 122 to a surface 123 of first additive manufactured part 112 that intersects with distal end 113. In addition, a second mount 124 is configured to couple a second specimen engaging member 126 to distal end 117 of second additive manufactured part 116. More specifically, second mount 124 may use a pair of fasteners 127a and 127b to mount second specimen engaging member 126 to a surface 125 of second additive manufacture part 116 that intersects with distal end 117. In other embodiments, first specimen engaging member 122 may be formed integrally with first additive manufactured part 112 and located at distal end 113, and second specimen engaging member 126 may be formed integrally with second additive manufactured part 116 and located at distal end 117. In such an embodiment, first and second specimen engaging members 112 and 116 would not need a separate mount or fasteners.

Extensometer structure 110 further includes a displacement assembly 128 coupled to proximal ends 111 and 115 of first and second additive manufacture parts 112 and 116, which is remote from first and second specimen engaging members 122 and 126 and allows first additive manufactured part 112 to move relative to second additive manufactured part 116. Under one embodiment, displacement assembly 128 may be a flexure assembly, such as the flexure assembly illustrated in FIGS. 1-3, which is a cross-flexure assembly 128. Cross-flexure assembly 128 located between and connecting first additive manufactured part 112 with second additive manufacture part 116 includes a first flexure 130 and a second flexure 132. Each of the flexures 130 and 132 are connected between or connect first additive manufactured part 112 and second additive manufacture part 114 together; however, second flexure 132 is mounted such that second flexure 132, which is generally planar, is orthogonal to the first flexure 130, which is also generally planar, so as to form a pivot axis 134. In other words, first flexure 130 is generally vertically oriented and second flexure 132 is generally horizontally oriented and intersect each other due to second flexure 132 extending through an aperture in first flexure 130. It should be realized that other flexure assemblies are possible including a pair of substantially parallel flexure members spaced apart from each other and are joined together to form a hinge assembly or a second flexure of a cross-flexure that extends only on one lateral side of a first flexure and likewise, the first flexure extending only on one lateral side of the second flexure and therefore are asymmetrical.

Under one embodiment, extensometer structure 110 further includes a backing plate 134 that mounts first flexure 130 directly to first additive manufactured part 112 with a pair of fasteners 133a and 133b and mounts to second flexure 132 with a pair of fasteners 135a and 135b to provide a coupling of first flexure 130 to second flexure 132. Extensometer structure 110 further includes a first flexure mount 136 that directly mounts first flexure 130 to second additive manufactured part 116 with a pair of fasteners 137a and 137b. Still further, extensometer structure 110 includes a pair of fasteners 138a and 138b that mount second flexure 132 directly to second additive manufactured part 116. It should be noted that the mounting of cross-flexure assembly 128 to first and second additive manufactured parts 112 and 116 should not be considered limiting in that extensometer structure 110 can comprise other elements or configurations to secure ends of the flexures 130 and 132 to first and second additive manufactured parts 112 and 116.

As illustrated in FIGS. 1-3, extensometer structure 110 includes first and second specimen engaging members 122 and 126, which are knife-edge blades that engage the test specimen at contact points or contact surfaces. In such an embodiment, displacement assembly 128 functions as a compliant spring to allow first and second knife-edge blades to move vertically in a parallel fashion while contacting the test specimen. Extensometer structure 110, in this embodiment, is commonly supported by the test specimen with clips, bands or springs and thus a hold down system is not needed as would be case in an embodiment with elongated probes or rods as specimen engaging members. The three apertures that extend from a top to a bottom of extension arm 114 of first additive manufactured part 112 and the three apertures that extend from a top to a bottom of extension arm 118 of second additive manufacture part 116 at their midpoints are configured to receive a spring for supporting the test specimen.

If desired, overtravel stops may be provided to limit a range of movement of the first specimen engaging member 122 relative to second specimen engaging member 126. Generally, overtravel stops allow the specimen engaging members 122 and 126 to move freely with movement limited by contact of surfaces that prevent further movement. In the embodiment illustrated in FIGS. 1-3, first additive manufactured part 112 includes an integrally formed overtravel stop 140 located at distal end 113 of first additive manufactured part 112. In addition, second additive manufactured part 116 includes an integrally formed overtravel stop 142 and an overtravel plate 144 located at distal end 117 of second additive manufactured part 116. In one embodiment, overtravel plate 144 may be a separate component as illustrated in FIGS. 1-3, however, in other embodiments overtravel plate 144 may be formed integrally with second additive manufactured part 116. In particular, overtravel stop 140 of first additive manufactured part 112 includes a first portion 139, which is a bottom surface of overtravel stop 140, and a second portion 141, which is an aperture. Overtravel stop 142 of second additive manufactured part 116 provides a protruding member that mates with the aperture 141 of overtravel stop 140.

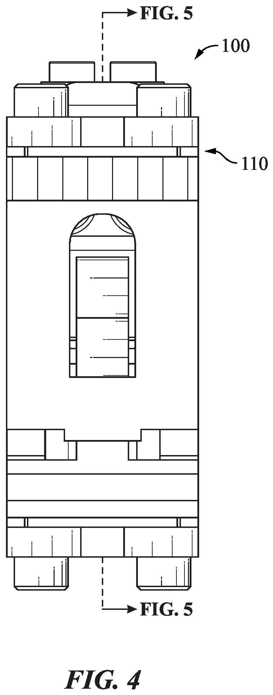

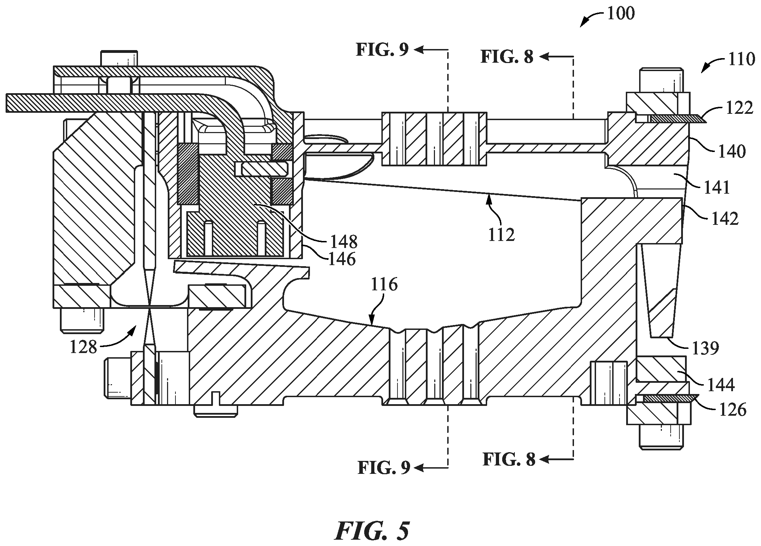

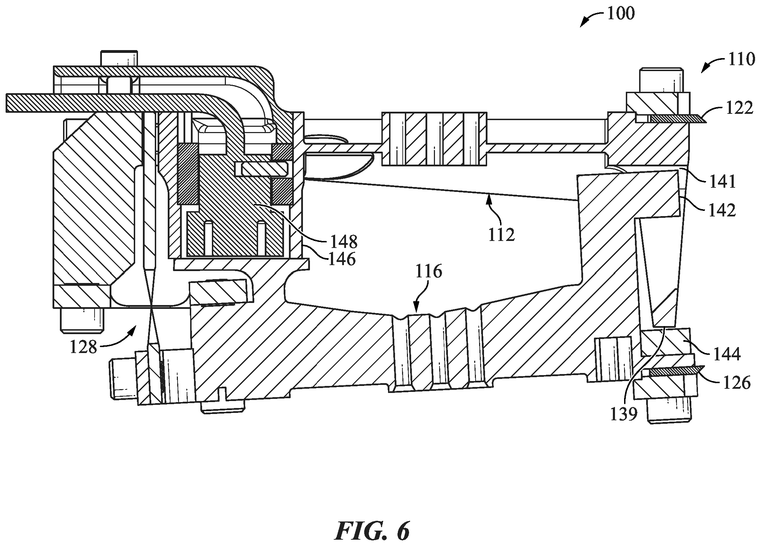

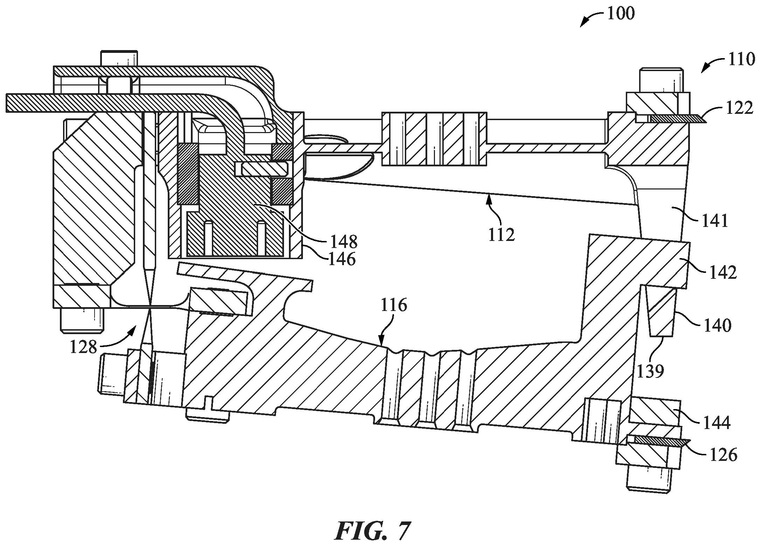

FIG. 4 is a front view of FIGS. 1 and 2 and FIG. 5 is a section view taken through the section line indicated in FIG. 4. FIG. 6 illustrates the section view in FIG. 5 in a full compression state, while FIG. 7 illustrates the section view of FIG. 5 in full tension state. When a test specimen is under a compression force, displacement assembly or pivot assembly 128 will allow first and second additive manufactured parts 112 and 116 and therefore specimen engaging members 122 and 126 to move toward each other about pivot axis 134. In the alternative, when a test specimen is under a tension force, displacement assembly or pivot assembly 128 will allow first and second additive manufactured parts 112 and 116 and therefore specimen engaging members 122 and 126 to move away from each other about pivot axis 134.

As illustrated in FIG. 6, when a test specimen is under a compression force, overtravel stops 140 and 142 and overtravel plate 144 limit displacement of first additive manufactured part 112 and second additive manufactured part 116. In particular, a top surface of overtravel plate 144 engages with first portion 139 of overtravel stop 140 and a top surface of the protruding member of overtravel stop 142 engages with an upper internal surface of the aperture or second portion 141 of overtravel stop 140. As illustrated in FIG. 7, when a test specimen is under a tension force, overtravel stop 140 and overtravel stop 142 limit displacement of first additive manufacture part 112 and second additive manufactured part 116. In particular, a bottom surface of protruding member of overtravel stop 142 engages with a lower internal surface of the aperture or second portion 141 in overtravel stop 140.

Extensometer 110 may include one or more sensing devices configured to measure movement or displacement of first and second additive manufactured parts 112 and 116 toward and away from each other. Such sensing devices can include, but are not limited to, capacitive sensors, optical sensors, resistive sensors, etc. In addition, strain sensors may be secured to one or more of the cross-flexures 130 and 132, for example, flexure 132, and may be used to sense displacement.

As illustrated in FIGS. 3 and 5-7, first additive manufactured part 112 further includes an integrally formed housing 146 configured to house a sensing device 148. Sensing device 148, under one embodiment, is a capacitive sensor configured to measure movement of first additive manufactured part 112 and second additive manufactured part 116 away from and towards each other. Under one embodiment, sensing device 148 is held in housing 146 with a set screw 147. Extensometer 100 further includes a sensor cap and cable clamp 150 that protects sensing device 148 located in housing 146 and also manages the at least one cable 149 that is coupled to sensing device 148. Still further, second additive manufactured part 116 includes an integrally formed plate 170 that acts as a target for the sensing device 148. For example, if sensing device 148 is a capacitive sensor, the external capacitance between the target (or plate 170) and an internal sensor plate inside sensor 148 forms part of the feedback capacitance in the oscillator circuit.

Under one embodiment, after various parts shown in FIG. 3 are formed with an additive manufacturing process into integrally formed parts, an additional machining step is taken to ensure that certain surfaces of the additive manufactured part are exact. For example, a top surface of plate 170 of second additive manufactured part 116 may be machined to be smooth, flat and have precise topography. This is important to ensure that sensor 148 is working properly. Other surfaces of first additive manufactured part 112 and second additive manufacture part 116 that may be machined include surfaces 123 and 125 that mate with first and second specimen engaging members 122 and 126, various bores that need tapping for receiving fasteners and certain surfaces that are used for reference datum surfaces.

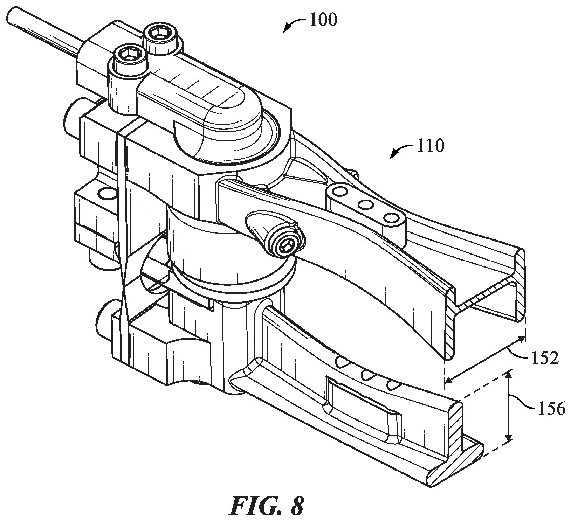

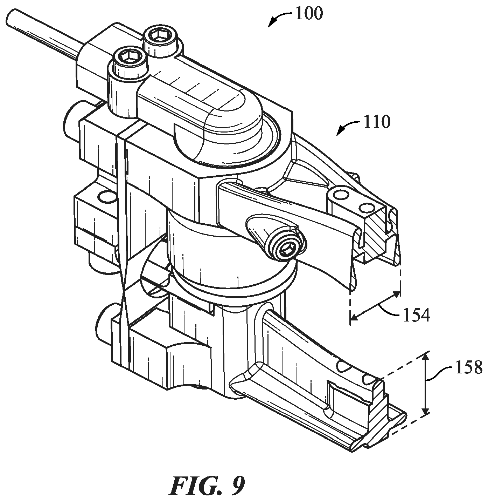

FIG. 8 illustrates a section view taken through a section line indicated in FIG. 5. The section line in FIG. 5 is taken through extensometer structure 110 at a distal end of extension arms 114 and 118. FIG. 9 illustrates a section view taken through a section line indicated in FIG. 5. The section line in FIG. 5 is taken through extensometer structure 110 at a midpoint of extension arms 114 and 118. It should be realized that while extension arm 114 has a different shape and profile in cross-section from the shape and profile in cross-section of extension arm 118 it is possible for extension arms 114 and 118 to have the same or different shapes and profiles in cross-section and for cross-section profiles to also be different than that which is shown. For example, extension arm 114 of first additive manufacture part 112 has an H-shaped profile in cross-section and extension arm 118 of second additive manufactured part 116 has a T-shaped profile in cross-section. Both profiles reduce the costs of manufacturing parts 112 and 116 as well as reducing weight of the parts 112 and 116 without losing strength.

As illustrated in FIGS. 8 and 9, the extension arm 114 of first additive manufactured part 112 comprises a profile in cross-section that has a width that is wider at the corresponding distal end 113 of the first additive manufactured part 112 than the corresponding midpoint of the first additive manufactured part 112. As illustrated in FIG. 8, extension arm 114 of first additive manufactured part 112 has a width 152. As illustrated in FIG. 9, extension arm 114 of first additive manufactured part 112 has a width 154. Width 152 is greater than width 154. As illustrated in FIGS. 8 and 9, the extension arm 118 of second additive manufactured part 116 comprises a profile in cross-section that has a height that is taller at the corresponding distal end 117 of the second additive manufactured part 116 than the corresponding midpoint of the second additive manufactured part 116. As illustrated in FIG. 8, extension arm 118 of second additive manufactured part 116 has a height 156. As illustrated in FIG. 9, extension arm 118 of second additive manufactured part 116 has a height 158. Height 156 is greater than height 158.

Although the subject matter has been described in language directed to specific environments, structural features and/or methodological acts, it is to be understood that the subject matter defined in the appended claims is not limited to the environments, specific features or acts described above as has been held by the courts. Rather, the environments, specific features and acts described above are disclosed as example forms of implementing the claims.

## Claims

1. An extensometer structure comprising:
a first integrally formed additive manufactured part having a proximal end, a distal end and an extension arm that extends from the proximal end to the distal end;
a second integrally formed additive manufactured part having a proximal end, a distal end and an extension arm that extends from the proximal end to the distal end of the second additive manufactured part;
a first specimen engaging member located at the distal end of the first additive manufactured part;
a second specimen engaging member located at the distal end of the second additive manufactured part; and
a displacement assembly coupled to the proximal ends of the first additive manufactured part and the second additive manufactured part, wherein the displacement assembly allows the first additive manufactured part to move relative to the second additive manufactured part.

2. The extensometer structure of claim 1, wherein the first additive manufactured part further includes an integrally formed overtravel stop located at the distal end of the first additive manufactured part and wherein the second additive manufactured part further includes an integrally formed overtravel stop located at the distal end of the second additive manufactured part.

3. The extensometer structure of claim 2, wherein a first portion of the overtravel stop of the first additive manufactured part is configured to engage with the overtravel stop of the second additive manufactured part to limit displacement of the first additive manufactured part and the second additive manufactured part away from each other.

4. The extensometer structure of claim 3, further comprising an overtravel plate coupled to a surface of the second additive manufactured part, wherein a second portion of the overtravel stop of the first additive manufactured part is configured to engage with the overtravel plate to limit displacement of the first additive manufactured part and the second additive manufactured part towards each other.

5. The extensometer structure of any of claims 1-4, wherein the displacement assembly comprises a flexure assembly, and optionally wherein the flexure assembly comprises a cross-flexure assembly that provides a pivot axis for first additive manufactured part and second manufactured part to pivot away from and towards each other.

6. The extensometer structure of any of claims 1-5, further comprising one or more sensing devices configured to measure movement of the first additive manufactured part and the second additive manufactured part away from and towards each other.

7. The extensometer structure of any of claims 1-6, wherein the first additive manufactured part further includes an integrally formed housing configured to house a sensing device configured to measure movement of the first additive manufactured part and the second additive manufactured part away from and towards each other, and wherein the second additive manufactured part further includes an integrally formed plate that acts as a target for the sensing device.

8. The extensometer structure of any of claims 1-7, wherein at least one of the extension arms of the first and second additive manufactured parts comprises a profile in cross-section that has a width that is wider at the corresponding distal ends of the first and second additive manufactured parts than the corresponding midpoints of the first and second additive manufactured parts, and optionally wherein the profile in cross-section of the extension arm of the first additive manufactured part comprises an H-shape profile in cross-section.

9. The extensometer structure any of claims 1-8, wherein at least one of the extension arms of the first and second additive manufactured parts comprises a profile in cross-section that has a height that is taller at the corresponding distal ends of the first and second additive manufactured parts than the corresponding midpoints of the first and second additive manufactured parts, and optionally wherein the profile in cross-section of the extension arm of the second additive manufactured part comprises a T-shaped profile in cross-section.

10. A method of manufacturing an extensometer comprising:
forming a first integral additive manufactured part having a proximal end, a distal end and an extension arm that extends from the proximal end to the distal end;
forming a second integral additive manufactured part having a proximal end, a distal end and an extension arm that extends from the proximal end to the distal end of the second integral additive manufactured part;
providing a first specimen engaging member at the distal end of the first integral additive manufactured part;
providing a second specimen engaging member at the distal end of the second integral additive manufactured part; and
coupling a displacement assembly to the proximal ends of the first integral additive manufactured part and the second integral additive manufactured part to allow the first integral additive manufactured part to move relative to the second integral additive manufactured part.

11. The method of claim 10, wherein forming the first integral additive manufactured part further comprises including an overtravel stop located at the distal end of the first integral additive manufactured part and wherein forming the second integral additive manufactured part further comprises including an overtravel stop located at the distal end of the second integral additive manufactured part, wherein a first portion of the overtravel stop of the first integral additive manufactured part engages with the overtravel stop of the second integral additive manufactured part to limit displacement of the first integral additive manufactured part and the second integral additive manufactured part away from each other.

12. The method of any of claims 10-11, further comprising mounting an overtravel plate to a surface of the second integral additive manufactured part, wherein a second portion of the overtravel stop of the first integral additive manufactured part engages with the overtravel plate to limit displacement of the first integral additive manufactured part and the second integral additive manufactured part towards each other.

13. The method of any of claims 10-12, wherein forming the first integral additive manufacture part comprises forming the extension arm of the first integral additive manufactured part with an H-shaped profile in cross-section, or wherein forming the second integral additive manufactured part comprises forming the extension arm of the second integral additive manufactured part with a T-shaped profile in cross-section.

14. The method of any of claims 10-13 wherein coupling the displacement assembly to the proximal ends of the first and second integral additive manufactured parts comprises coupling a flexure assembly to the proximal ends of the first and second integral additive manufactured parts.

15. The method of claim 14, wherein coupling the displacement assembly to the proximal ends of the first and second integral additive manufactured parts comprises coupling a pivot assembly to the proximal ends of the first and second integral additive manufacture parts.
